# EUROPEAN PATENT APPLICATION

(11) **EP 3 217 626 A1**
(43) Date of publication of application: **13.09.2017**
(21) Application number: 15857093.7
(22) Date of filing: 11.02.2015
(51) Int. Cl.: H04L 29/08, H04L 12/26

(54) **REMOTE BRIDGE IMPLEMENTING METHOD, DEVICE, SYSTEM AND COMPUTER STORAGE MEDIUM**

(30) Priority: 05.11.2014 CN 201410620045
(71) Applicant: ZTE Corporation, Shenzhen, Guangdong 518057 (CN)
(72) Inventor: LIU, Chunlei, Shenzhen Guangdong 518057 (CN); LONG, Tianjian, Shenzhen Guangdong 518057 (CN)
(74) Representative: Regimbeau
(86) International application number: PCT/CN2015/072785
(87) International publication number: WO 2016/070526

(57) **Abstract**

A method, device and system for realizing remote bridging and a computer storage medium are provided. The method includes: acquiring an underlying data message at an Ethernet port of a local detected device; encapsulating and compressing the underlying data message; and transmitting the underlying data message being compressed.

## Description

### TECHNICAL FIELD

The present invention relates to a technology of remote management, and particularly relates to a method, device and system for realizing remote bridging and a computer storage medium.

### BACKGROUND

In an existing art, remote management for a detected device is generally realized in a remote login manner, i.e., a server logs into the detected device through the remote login manner provided by an operating system, so as to detect and control the detected device. However, through the remote login manner, only a management function for the detected device at a business level can be provided and a remote transmission of underlying data of the detected device is impossible. In addition, remote services cannot be localized in the remote login manner, i.e., service-related underlying data cannot be locally analyzed and processed in detail.

### SUMMARY

Embodiments of the present invention provide a method, device and system for realizing remote bridging and a computer storage medium, which are capable of realizing a remote transmission of underlying data of a detected device to detect and control the remote detected device.

Technical solutions of embodiments of the present invention are realized as follows.

An embodiment of the present invention provides a method for realizing remote bridging, the method is applied to a client and includes:
acquiring an underlying data message at an Ethernet port of a local detected device;
encapsulating and compressing the underlying data message, to obtain a compressed underlying data message; and
transmitting the compressed underlying data message.

In an embodiment, the method further includes: receiving an analysis processing result fed back by a server.

An embodiment of the present invention further provides a computer storage medium storing computer executable instructions which are used for executing the method for realizing remote bridging applied to the client according to the embodiment of the present invention.

An embodiments of the present invention further provides a method for realizing remote bridging. The method is applied to a server and includes:
receiving a compressed underlying data message;
decompressing the compressed underlying data message; and
processing the underlying data message being decompressed.

In an embodiment, a step of processing the underlying data message being decompressed includes: analyzing the underlying data message being decompressed to obtain an analysis processing result; or transmitting the underlying data message being decompressed to a detected device or a related data device directly connected with the server.

In an embodiment, after the analysis processing result is obtained, the method further includes: feeding back the analysis processing result.

An embodiment of the present invention further provides a computer storage medium storing computer executable instructions which are used for executing the method for realizing remote bridging applied to the server according to the embodiment of the present invention.

An embodiment of the present invention further provides a client, including:
an acquiring module, arranged to acquire an underlying data message at an Ethernet port of a local detected device;
a compressing module, arranged to encapsulate and compress the underlying data message to obtain a compressed underlying data message; and
a transmitting module, arranged to transmit the compressed underlying data message.

In an embodiment, the client further includes a first receiving module arranged to receive an analysis processing result fed back by the server.

An embodiment of the present invention further provides a server, including:
a second receiving module, arranged to receive a compressed underlying data message;
a decompressing module, arranged to decompress the compressed underlying data message; and
a processing module is arranged to process the underlying data message being decompressed.

In an embodiment, the processing is arranged to: analyze the underlying data message being decompressed to obtain an analysis processing result; or transmit the underlying data message being decompressed to a detected device or a related data device directly connected with the server.

In an embodiment, the server further includes a feedback module arranged to feed back the analysis processing result after the processing module obtains the analysis processing result.

An embodiment of the present invention further provides a system for realizing remote bridging, including: a client and a server. The client is arranged to acquire an underlying data message at an Ethernet port of a local detected device; encapsulate and compress the underlying data message, to obtain the compressed underlying data message; and transmit the compressed underlying data message. The server is arranged to receive the compressed underlying data message; decompress the compressed underlying data message; and process the underlying data message being decompressed.

The method, the device and the system for realizing remote bridging and the computer storage medium provided in embodiments of the present invention include: the client acquires an underlying data message at an Ethernet port of a local detected device, encapsulates and compresses the underlying data message, to obtain the compressed underlying data message, and then transmits the compressed underlying data message; the server receives the compressed underlying data message, decompresses the compressed underlying data message, and processes the underlying data message being decompressed. Thus, remote transmission for underlying data of a detected device can be realized, so as to detect and control the remote detected device. In addition, a remote service can be localized, so that service-related underlying data can be local analyzed and processed.

### BRIEF DESCRIPTION OF DRAWINGS

FIG. 1 is a network architecture diagram for realizing a local connection of two detected devices in the related art;
FIG. 2 is a schematic flow chart illustrating realization of remote access and control in a remote login manner in a related art;
FIG. 3 is a schematic flow chart I illustrating a method for realizing remote bridging according to an embodiment of the present invention;
FIG. 4 is a schematic flow chart II illustrating a method for realizing remote bridging according to an embodiment of the present invention;
FIG. 5 is a schematic flow chart III illustrating a method for realizing remote bridging according to an embodiment of the present invention;
FIG. 6 is a structural schematic diagram illustrating a client according to an embodiment of the present invention;
FIG. 7 is a structural schematic diagram illustrating a server according to an embodiment of the present invention; and
FIG. 8 is a structural schematic diagram illustrating a system for realizing remote bridging according to an embodiment of the present invention.

### DETAILED DESCRIPTION

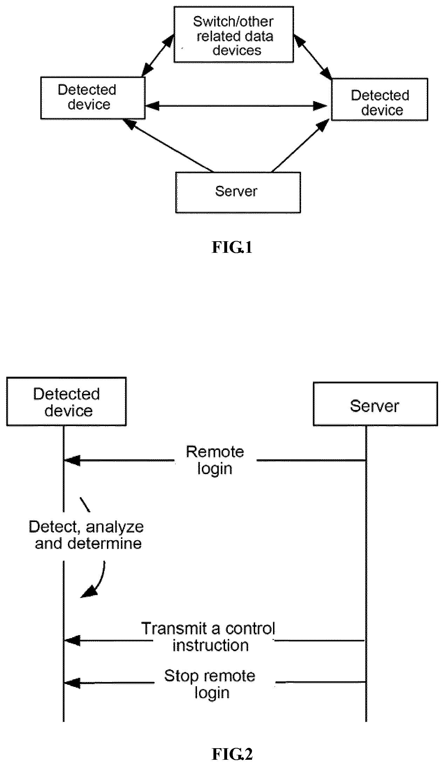

In the related art, as shown in FIG. 1, in local connection, two detected devices can be connected through a switch or connected directly. Meanwhile, the detected devices can be remotely accessed and controlled in a remote login manner through an operating system of a server. A specific flow for realizing remote access and control is shown in FIG. 2.

However, when the two detected devices are far away from each other, an original local connection architecture shown in FIG. 1 can only provide a management function at a service level in an IP routing manner, and cannot realize a transmission of Layer 2 massages (i.e., underlying data).

In view of the above, in embodiments of the present invention, a client is arranged to acquire the underlying data message at an Ethernet port of a local detected device, encapsulate and compress the underlying data message to obtain a compressed underlying data message, and transmit the compressed underlying data message; and a server is arranged to receive the compressed underlying data message, decompress the compressed underlying data message, and process the underlying data message being decompressed.

Herein, a step of processing the underlying data message being decompressed includes analyzing the underlying data message being decompressed to obtain an analysis processing result, or transmitting the underlying data message being decompressed to a detected device or a related data device directly connected with the server.

It should be noted that the related data device may be a switch for performing data interaction with the server. The client/server may be realized by a device to which the client/ server belongs, such as a PC, tester and the like. In addition, the client and the server are merely used for indicating terminals to which the client/server belongs for the purpose of convenient description. In practical applications, the client and the server can be exchanged.

The present invention is further described in detail below in combination with drawings and specific embodiments.

### Embodiment I

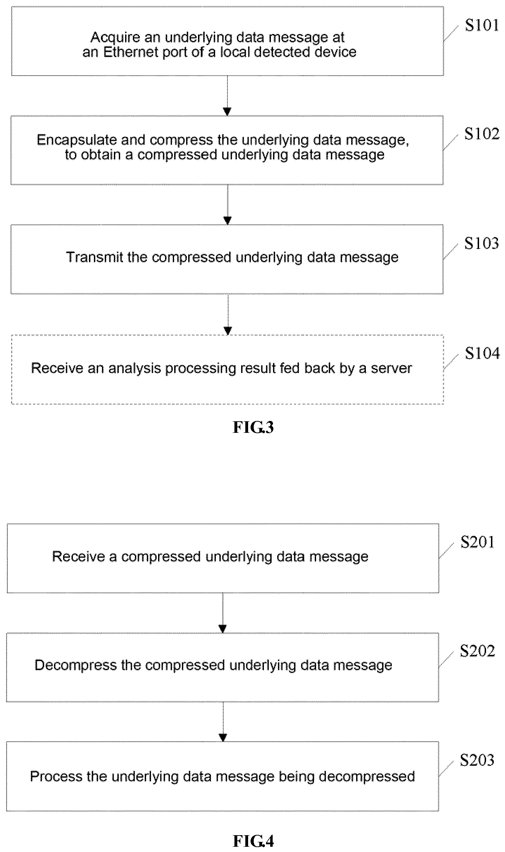

FIG. 3 is a schematic flow chart I illustrating a method for realizing remote bridging according to an embodiment of the present invention. The method is applied to a client, and as shown in FIG. 3, the method for realizing remote bridging according to the embodiment of the present invention includes steps described below.

In step S101, an underlying data message at an Ethernet port of a local detected device is acquired.

Herein, it should be noted that the client is provided with two network cards, one of which is arranged to directly connect a local detected device to acquire the underlying data message at the Ethernet port of the local detected device, and the other one is arranged to connect the Internet to realize a transmission control protocol (TCP) connection between the client and the remote server.

Specifically, the client acquires the underlying data message at the Ethernet port of the local detected device through the network card. It should be noted that in practical application, the Ethernet port of the local detected device, through which the underlying data message is acquired by the client, needs to be pre-assigned.

In step S102, the underlying data message is encapsulated and compressed to obtain a compressed underlying data message.

Specifically, the client encapsulates and compresses the underlying data message in real time in a preset compression manner, so as to obtain the compressed underlying data message.

In step S103, the compressed underlying data message is transmitted.

Specifically, the compressed underlying data message is transmitted to the server by the client through the other network card, so as to be analyzed by the server, or to be forwarded to a detected device or a related data device directly connected with the server by the server.

Further, in the embodiment of the present invention, the method further includes step S104: an analysis processing result fed back by the server is received.

An embodiment of the present invention further provides a computer storage medium storing computer executable instructions which are used for executing the method for realizing the remote bridging applied to the client in embodiment I of the present invention.

### Embodiment II

FIG. 4 is a schematic flow chart II illustrating a method for realizing remote bridging according to an embodiment of the present invention. The method is applied to a server, and as shown in FIG. 4, the method for realizing remote bridging in the embodiment of the present invention includes steps described below.

In step S201, a compressed underlying data message is received.

Specifically, the compressed underlying data message transmitted from the client is received by the server through an Ethernet port connected with the Internet.

In step S202, the compressed underlying data message is decompressed.

Specifically, the compressed underlying data message is decompressed by the server in a decompression manner corresponding to the preset compression manner.

In step S203, the underlying data message being decompressed is processed.

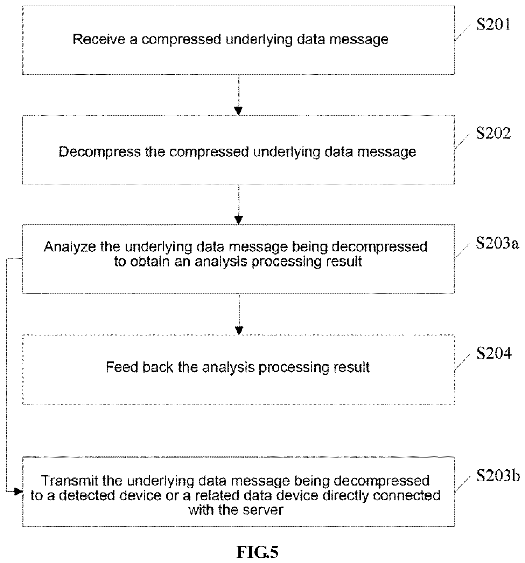

In an embodiment, as shown in FIG. 5, a step of processing the underlying data message being decompressed includes the following step.

In step S203a, the underlying data message being decompressed is analyzed to obtain an analysis processing result.

Specifically, the server can analyze the underlying data message being decompressed according to setting requirements for the detected device, to obtain the analysis processing result.

Further, as shown in FIG. 5, in the embodiment of the present invention, the method further includes step S204 after the underlying data message being decompressed is analyzed to obtain the analysis processing result.

In step S204, the analysis processing result is fed back.

In an embodiment, as shown in FIG. 5, a step of processing the underlying data message being decompressed includes step S203b.

In step S203b, the underlying data message being decompressed is transmitted to the detected device or a related data device directly connected with the server.

Specifically, the server transmits the underlying data message being decompressed to the detected device or the related data device directly connected with the server.

An embodiment of the present invention further provides a computer storage medium storing computer executable instructions which are used for executing the method for realizing the remote bridging applied to the server provided by embodiment II of the present invention.

### Embodiment III

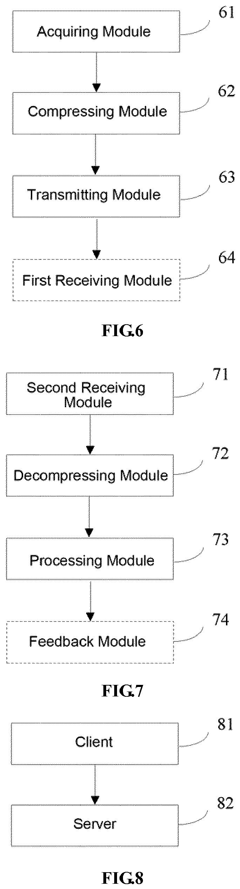

FIG. 6 is a structural schematic diagram illustrating a client according to an embodiment of the present invention. As shown in FIG. 6, the client includes an acquiring module 61, a compressing module 62 and a transmitting module 63.

The acquiring module 61 is arranged to acquire an underlying data message at an Ethernet port of a local detected device.

The compressing module 62 is arranged to encapsulate and compress the underlying data message to obtain a compressed underlying data message.

The transmitting module 63 is arranged to transmit the compressed underlying data message.

Further, the client further includes a first receiving module 64 arranged to receive an analysis processing result fed back by the server.

### Embodiment IV

FIG. 7 is a structural schematic diagram illustrating a server according to an embodiment of the present invention. As shown in FIG. 7, the server includes a second receiving module 71, a decompressing module 72 and a processing module 73.

The second receiving module 71 is arranged to receive a compressed underlying data message.

The decompressing module 72 is arranged to decompress the compressed underlying data message.

The processing module 73 is arranged to process the underlying data message being decompressed.

Specifically, the processing module 73 is arranged to analyze the underlying data message being decompressed to obtain an analysis processing result, or transmit the underlying data message being decompressed to a detected device or a related data device directly connected with the server.

Further, the server can further include a feedback module 74 arranged to feed back the analysis processing result after the analysis processing result is obtained by the processing module 73.

### Embodiment V

FIG. 8 is a structural schematic diagram illustrating a system for realizing remote bridging according to an embodiment of the present invention. As shown in FIG. 8, the system includes a client 81 and a server 82.

The client 81 is arranged to acquire an underlying data message at an Ethernet port of a local detected device; encapsulate and compress the underlying data message to obtain a compressed underlying data message; and transmit the compressed underlying data message.

The server 82 is arranged to receive the compressed underlying data message; decompress the compressed underlying data message; and process the underlying data message being decompressed to obtain an analysis processing result.

Specifically, the underlying data message being decompressed is processed by the server 82 in the following manners: the underlying data message being decompressed is analyzed to obtain an analysis processing result; or the underlying data message being decompressed is transmitted to a detected device or a related data device directly connected with the server.

In practical application, each module included in the client can be realized by a central processing unit (CPU), a micro processor unit (MPU), a digital signal processor (DSP) or a FIELD PROGRAMMABLE GATE Array (FPGA) in the device to which the client of the embodiments of the present inventionbelongs. Similarly, each module included in the server can be realized by CPU, MPU, DSP, or FPGA and the like in the device to which the server of the embodiments of the present invention belongs.

Technical solutions described in embodiments of the present invention can be combined at random without conflicting.

Those skilled in the art should understand that embodiments of the present invention can be provided as a method, system or computer program product. Therefore, the present invention can adopt a form of a hardware embodiment, a software embodiment or an embodiment combining software and hardware. Moreover, the present invention can adopt a form of a computer program product capable of being implemented on one or more computer available storage media (including but not limited to disk memory, optical memory, etc.) containing computer available program codes.

The present invention is described with reference to flow charts and/or block diagrams according to the method, device (system) and computer program product in embodiments of the present invention. It should be understood that each flow and/or block in the flow diagrams and/or block diagrams and a combination of flows and/or blocks in the flow diagrams and/or block diagrams can be realized through computer program instructions. The computer program instructions can be provided to a processor of a general-purpose computer, a special-purpose computer, an embedded processor, or other programmable data processing devices to generate a machine, so that a device for realizing designated functions in one or more flows of the flow diagrams and/or one or more blocks of the block diagrams is generated through the instructions executed by the processor of the computer or other programmable data processing devices.

The computer program instructions can also be stored in a computer readable memory which can guide the computer or other programmable data processing devices to operate in a special mode, so that the instructions stored in the computer readable memory generate a manufactured product including an instruction device, the instruction device realizing designated functions in one or more flows of the flow diagrams and/or one or more blocks of the block diagrams.

The computer program instructions can also be loaded on the computer or other programmable data processing devices, so that a series of operation steps are executed on the computer or other programmable devices to generate processing realized by the computer. Therefore, the instructions executed on the computer or other programmable devices provide steps for realizing designated functions in one or more flows of the flow diagrams and/or one or more blocks of the block diagrams.

The above are just specific implementation manners of the present invention, but the protection scope of the present invention is not limited thereto. Any change or replacement contemplated easily by those skilled in the art familiar with the technical field within the technical scope disclosed by the present invention shall be covered within the protection scope of the present invention.

### INDUSTRIAL APPLICABILITY

In embodiments of the present invention, the client acquires the underlying data message at the Ethernet port of the local detected device, encapsulates and compresses the underlying data message, and transmits the compressed underlying data message. Further, the server receives the compressed underlying data message, decompresses the compressed underlying data message, and processes the underlying data message being decompressed. Thus, remote transmission of underlying data of a detected device can be realized, so as to detect and control the remote detected device. In addition, a remote service can be localized, so that service-related underlying data can be local analyzed and processed.

## Claims

1. A method applied to a client for realizing remote bridging, comprising:
acquiring an underlying data message at an Ethernet port of a local detected device;
encapsulating and compressing the underlying data message, to obtain a compressed underlying data message; and
transmitting the compressed underlying data message.

2. The method according to claim 1, further comprising: receiving an analysis processing result fed back by a server.

3. A method applied to a server for realizing remote bridging, comprising:
receiving a compressed underlying data message;
decompressing the compressed underlying data message; and
processing the underlying data message being decompressed.

4. The method according to claim 3, wherein the step of processing the underlying data message being decompressed comprises:
analyzing the underlying data message being decompressed to obtain an analysis processing result; or
transmitting the underlying data message being decompressed to a detected device or a related data device directly connected with the server.

5. The method according to claim 4, further comprising the following step after the analysis processing result is obtained: feeding back the analysis processing result.

6. A client, comprising:
an acquiring module, arranged to acquire an underlying data message at an Ethernet port of a local detected device;
a compressing module, arranged to encapsulate and compress the underlying data message to obtain a compressed underlying data message; and
a transmitting module, arranged to transmit the compressed underlying data message.

7. The client according to claim 6, further comprising a first receiving module, arranged to receive an analysis processing result fed back by a server.

8. A server, comprising:
a second receiving module, arranged to receive a compressed underlying data message;
a decompressing module, arranged to decompress the compressed underlying data message; and
a processing module, arranged to process the underlying data message being decompressed.

9. The server according to claim 8, wherein the processing module is arranged to:
analyze the underlying data message being decompressed to obtain an analysis processing result; or
transmit the underlying data message being decompressed to a detected device or a related data device directly connected with the server.

10. The server according to claim 9, further comprising a feedback module arranged to, after the underlying data message being decompressed is analyzed by the processing module to obtain an analysis processing result, feed back the analysis processing result.

11. A system for realizing remote bridging, comprising: a client and a server;
the client is arranged to acquire an underlying data message at an Ethernet port of a local detected device; encapsulate and compress the underlying data message, to obtain an compressed underlying data message; and transmit the compressed underlying data message;
the server is arranged to receive the compressed underlying data message; decompress the compressed underlying data message; and process the underlying data message being decompressed.

12. A computer storage medium storing computer executable instructions which are used for executing the method for realizing remote bridging according to claim 1 or 2.

13. A computer storage medium storing computer executable instructions which are used for executing the method for realizing remote bridging according to any one of claims 3 to 5.
